(19) Europäisches Patentamt
European Patent Office
Office européen des brevets

(11) **EP 1 528 511 B1**

(12) **FASCICULE DE BREVET EUROPEEN**

(45) Date de publication et mention
de la délivrance du brevet:
**26.01.2011 Bulletin 2011/04**

(51) Int Cl.:
***G06T 13/40*** *(2011.01)*

(21) Numéro de dépôt: **04292230.2**

(22) Date de dépôt: **17.09.2004**

(54) **Déplacement d'un objet articulé virtuel dans un environnement virtuel en évitant les collisions entre l'objet articulé et l'environnement**

Verschiebung eines virtuellen Gliederobjekts in einer virtuellen Umgebung unter Vermeidung von Kollisionen zwischen dem Gliederobjekt und der Umgebung

Displacement of a virtual articulated object in a virtual environment avoiding collisions between the articulated object and the environment

(84) Etats contractants désignés:
**DE ES FR GB IT SE**

(30) Priorité: **29.10.2003 FR 0312641**

(43) Date de publication de la demande:
**04.05.2005 Bulletin 2005/18**

(73) Titulaire: **SNECMA**
**75015 Paris (FR)**

(72) Inventeurs:
• **Maille, Bruno**
**75015 Paris (FR)**
• **Ramstein, Edouard**
**77000 Melun (FR)**
• **Chedmail, Patrick**
**44240 La Chappelle-sur-Erdre (FR)**

(74) Mandataire: **Joly, Jean-Jacques et al**
**Cabinet Beau de Loménie**
**158, rue de l'Université**
**75340 Paris cedex 07 (FR)**

(56) Documents cités:
**US-A- 6 067 096**

• **ANDERSON R J ET AL: "Using virtual objects to aid underground storage tank teleoperation" ROBOTICS AND AUTOMATION, 1994. PROCEEDINGS., 1994 IEEE INTERNATIONAL CONFERENCE ON SAN DIEGO, CA, USA 8-13 MAY 1994, LOS ALAMITOS, CA, USA,IEEE COMPUT. SOC, 8 mai 1994 (1994-05-08), pages 1421-1426, XP010097707 ISBN: 0-8186-5330-2**
• **BON B ET AL: "On-line collision avoidance for the Ranger telerobotic flight experiment" ROBOTICS AND AUTOMATION, 1996. PROCEEDINGS., 1996 IEEE INTERNATIONAL CONFERENCE ON MINNEAPOLIS, MN, USA 22-28 APRIL 1996, NEW YORK, NY, USA,IEEE, US, 22 avril 1996 (1996-04-22), pages 2041-2048, XP010163040 ISBN: 0-7803-2988-0**
• **MAILLE B ET AL: "Multi-agent approach and emergence of a virtual human behaviour in a vr environment" IEEE 2002 INTERNATIONAL CONFERENCE ON SYSTEMS, MAN AND CYBERNETICS. (SMC'02). YASMINE HAMMAMET, TUNESIA, OCT. 6 - 9, 2002, IEEE INTERNATIONAL CONFERENCE ON SYSTEMS, MAN, AND CYBERNETICS, NEW YORK, NY: IEEE, US, vol. 7 OF 7, 6 octobre 2002 (2002-10-06), pages 119-124, XP010625598 ISBN: 0-7803-7437-1**

## Description

Domaine de l'invention

La présente invention se rapporte au domaine de la simulation de déplacement d'un objet articulé virtuel, dans un environnement virtuel. En particulier l'invention concerne l'évitement des collisions entre l'objet articulé et son environnement.

Arrière-plan de l'invention

Dans de nombreuses industries, telles que l'aéronautique ou le spatial, on fait couramment appel à des modélisations en réalité virtuelle. Par exemple, on utilise souvent une maquette numérique pour évaluer les interférences entre différentes pièces.

De même, la modélisation peut être utilisée pour simuler des actions humaines ou robotiques dans un environnement défini afin de visualiser, par exemple les déplacements qu'un technicien ou robot devra réaliser pour effectuer ces actions. Ceci est utile pour valider et optimiser l'accessibilité de certaines pièces d'un dispositif, comme celles d'un moteur d'avion, qui demandent des inspections et des maintenances régulières.

Ainsi, la facilité d'accès des différents éléments d'un dispositif peut être contrôlée virtuellement dès la modélisation de ces derniers, grâce à une simulation au moyen d'un objet articulé virtuel.

Un objet articulé virtuel est un ensemble de données numériques définissant un système cinématique caractérisé par plusieurs éléments articulés selon une pluralité de degrés de liberté.

Ainsi, à un instant donné, l'objet articulé virtuel peut être défini par sa position et orientation dans un espace métrique et par les valeurs des degrés de liberté de ces articulations. Ces données ainsi que des paramètres définissant l'environnement de l'objet articulé virtuel peuvent être stockés dans un support de données numériques.

L'utilisation d'un objet articulé virtuel pour ce type d'application existe déjà.

En effet, un exemple est donné par l'article de Chedmail, Damay et Le Roy, intitulée « Réalité virtuelle, maquette numérique du produit, outils de distribution et partage de la conception » (Journées Priméca, La Plagne 7-9 avril 1999).

Cet article propose une méthode pour valider l'accessibilité au montage/démontage d'un objet dans un environnement encombré en utilisant un modèle de déplacement de deux bras articulés virtuels dans un environnement virtuel.

Afin d'éviter la collision entre les bras articulés et l'environnement, la méthode proposée dans l'article de Chedmail et al, utilise le calcul d'un gradient d'une ligne de collision par rapport aux degrés de liberté des bras articulés.

Les calculs des gradients par différence finie nécessitent de réaliser de nombreux déplacements de chaque articulation des bras articulés, et pour chaque déplacement un calcul de la longueur de la ligne de collision est nécessaire. Cette méthode est très lente car très coûteuse en temps de calcul.

D'autres exemples sont décrits dans le document d'Anderson et al « Using virtual objects to aid underground storage tank teleoperation » Robotics and automation, 1994 IEEE international conférence on San Diego, CA, USA et dans le document de Bon et al « On-line collision avoidance for the Ranger telerobotic flight experiment » Robotics and automation, 1996 IEEE international conférence on Minneapolis, MN, USA. Ces méthodes sont aussi très coûteuses en temps de calcul.

Objet et résumé de l'invention

La présente invention vise à remédier aux inconvénients précités en proposant un procédé et un système qui permettent de simuler le déplacement ou la manipulation d'un objet articulé en évitant les collisions de ce dernier avec son environnement tout en limitant le temps de calcul.

Ces buts sont atteints grâce à un procédé de déplacement d'un objet articulé virtuel selon une succession de mouvements élémentaires dans un environnement virtuel, l'objet articulé étant repéré dans cet environnement par une position globale, une orientation globale et une pluralité d'angles d'articulation définissant la position d'un ensemble d'éléments articulés composant ledit objet articulé, selon une pluralité de degrés de liberté, le procédé comportant les étapes suivantes :

- calculer une distance d'interaction entre l'objet articulé et son environnement ;
- extraire de ladite distance d'interaction, un premier point appartenant à un des éléments de l'objet articulé et un second point appartenant à l'environnement ;
- définir un vecteur d'extraction unique à partir desdits premier et second points ; et
- éloigner l'objet articulé de son environnement selon un mouvement défini en fonction du vecteur d'extraction unique, le mouvement d'éloignement étant réalisé selon un mouvement de translation agissant sur la position globale de l'objet articulé, et un mouvement de rotation agissant sur l'orientation globale de l'objet articulé, et un mouvement de rotation articulaire agissant au niveau de chacune des articulations appartenant à une chaîne d'articulations qui précèdent l'élément de l'objet articulé auquel appartient ledit premier point ;

le calcul du mouvement de rotation agissant sur l'orientation globale de l'objet articulé comportant les étapes suivantes :

- définir un premier vecteur global entre le centre de gravité de l'objet articulé et l'origine du vecteur d'extraction ;
- définir un second vecteur global entre le centre de gravité de l'objet articulé et l'extrémité du vecteur d'extraction ;
- calculer un angle de rotation globale faisant coïncider le premier vecteur global sur le second vecteur global ;
- calculer un ou des angles élémentaires de rotation globale en décomposant ledit angle de rotation globale suivant le ou les axes définissant l'orientation globale de l'objet articulé ; et
- tourner l'objet articulé selon un ou des angles proportionnels au dit ou aux dits angles élémentaires de rotation globale.

Ainsi, le procédé selon l'invention utilise un seul calcul de distance d'interaction pour éloigner l'objet articulé de son environnement. Cela permet une grande simplicité et un gain de temps important.

Le procédé selon l'invention, comporte en outre une étape déterminant après chaque mouvement élémentaire de ladite succession de mouvements élémentaires si une collision est survenue entre l'objet articulé et son environnement.

Selon un premier mode de réalisation de l'invention, la distance d'interaction correspond à une profondeur de pénétration, de sorte que le vecteur d'extraction est égal aux coordonnées du second point moins celles du premier point, la profondeur de pénétration permettant le déplacement de l'objet articulé avec une collision limitée et contrôlée avec son environnement.

Selon un second mode de réalisation de l'invention, la distance d'interaction correspond à une distance minimale, de sorte que le vecteur d'extraction est égal aux coordonnées du premier point moins celles du second point, la distance minimale permettant le déplacement de l'objet articulé sans collision avec son environnement.

Le procédé comporte en outre une étape d'annulation du dernier mouvement élémentaire de ladite succession de mouvements élémentaires lorsqu'une collision est survenue entre l'objet articulé et son environnement.

Avantageusement, lesdites étapes d'extraction des premier et second points, de définition du vecteur d'extraction et d'éloignement de l'objet articulé, ne sont pas exécutées lorsqu'une collision n'est pas survenue entre l'objet articulé et l'environnement.

Selon une première particularité de l'invention, l'éloignement de l'objet articulé de son environnement peut être réalisé selon un mouvement de translation proportionnel aux composantes du vecteur d'extraction agissant sur la position globale de l'objet articulé.

Selon une autre particularité de l'invention, l'éloignement de l'objet articulé de son environnement est réalisé selon un mouvement de rotation articulaire agissant au niveau de chacune des articulations appartenant à une chaîne d'articulations qui précèdent l'élément de l'objet articulé auquel appartient ledit premier point, le mouvement de rotation articulaire agissant au niveau d'une articulation donnée de chacune desdites articulations comportant les étapes suivantes :

- définir un premier vecteur local entre le centre d'articulation de ladite articulation donnée et l'origine du vecteur d'extraction ;
- définir un second vecteur local entre le centre d'articulation de ladite articulation donnée et l'extrémité du vecteur d'extraction ;
- calculer un angle de rotation locale faisant coïncider le premier vecteur local sur le second vecteur local ;
- calculer un ou des angles élémentaires de rotation articulaire en décomposant ledit angle de rotation locale suivant le ou les axes définissant le ou les degrés de liberté correspondant audite articulation donnée ; et
- tourner l'élément articulé au niveau de ladite articulation donnée selon un ou des angles proportionnels au dit ou aux dits angles élémentaires d'articulation.

L'angle de rotation globale peut être calculé au moyen d'un produit vectoriel global entre les premier et second vecteurs globaux, et l'angle de rotation locale peut être calculé au moyen d'un produit vectoriel local entre les premier et second vecteurs locaux.

Le ou les angles élémentaires de rotation globale peuvent être calculés au moyen d'un ou des produits scalaires entre le produit vectoriel global et le ou les axes de l'orientation globale, et le ou les angles élémentaires d'articulation peuvent être calculés au moyen d'un ou des produits scalaires entre le produit vectoriel local et le ou les axes de degré de liberté de l'articulation donnée.

Selon un mode particulier de l'invention, le déplacement de l'objet articulé peut être mis en oeuvre au moyen d'un agent d'attraction agissant sur la position globale, et/ou l'orientation globale, et/ou la pluralité de degrés de liberté de l'objet articulé.

L'éloignement de l'objet articulé de son environnement peut être mis en oeuvre au moyen d'un agent de glissement agissant sur la position globale, et/ou l'orientation globale, et/ou la pluralité de degrés de liberté de l'objet articulé.

Avantageusement, le procédé comporte en outre une étape de déplacement de l'objet articulé en temps réel par un opérateur au moyen d'un agent d'opérateur agissant sur la position et/ou l'orientation et/ou la pluralité de degrés de l'objet articulé.

Selon une particularité de l'invention, l'objet articulé peut être un mannequin virtuel se déplaçant sur un sol de l'environnement virtuel, le mannequin étant défini par une position sur le sol virtuel, une orientation autour d'un axe vertical perpendiculaire au dit sol et passant par le centre de gravité du mannequin, et la pluralité d'angles d'articulation définissant l'ensemble de ses éléments articulés.

L'invention vise aussi un programme informatique conçu pour mettre en oeuvre le procédé décrit ci-dessus lorsqu'il est exécuté par un ordinateur.

Brève description des dessins

D'autres particularités et avantages du procédé et du système selon l'invention ressortiront mieux à la lecture de la description faite ci-après, à titre indicatif mais non limitatif, en référence aux dessins annexés sur lesquels :

- la figure 1 est une vue en perspective des moyens matériels mis en oeuvre dans le système ou procédé de l'invention ;
- la figure 2A illustre très schématiquement un objet articulé virtuel défini dans un espace métrique selon l'invention ;
- la figure 2B illustre très schématiquement un mannequin virtuel défini dans un espace métrique selon l'invention ;
- la figure 3A illustre très schématiquement un vecteur d'extraction défini dans un mode de distance minimale selon l'invention ;
- la figure 3B illustre très schématiquement un vecteur d'extraction défini dans un mode de profondeur de pénétration selon l'invention ;
- la figure 4 illustre très schématiquement un mouvement d'éloignement agissant sur la position globale de l'objet articulé selon l'invention ;
- la figure 5 illustre très schématiquement un mouvement d'éloignement agissant sur l'orientation globale de l'objet articulé selon l'invention ;
- la figure 6 illustre très schématiquement un mouvement d'éloignement agissant au niveau d'une articulation donnée de l'objet articulé selon l'invention ;
- la figure 7A est un organigramme illustrant les étapes principales du déplacement de l'objet articulé selon l'invention ;
- la figure 7B est une variante de la figure 7A ; et
- la figure 8 illustre très schématiquement une architecture d'un système multi-agent utilisé pour le déplacement de l'objet articulé selon l'invention.

Description détaillée de modes préférentiels de réalisation

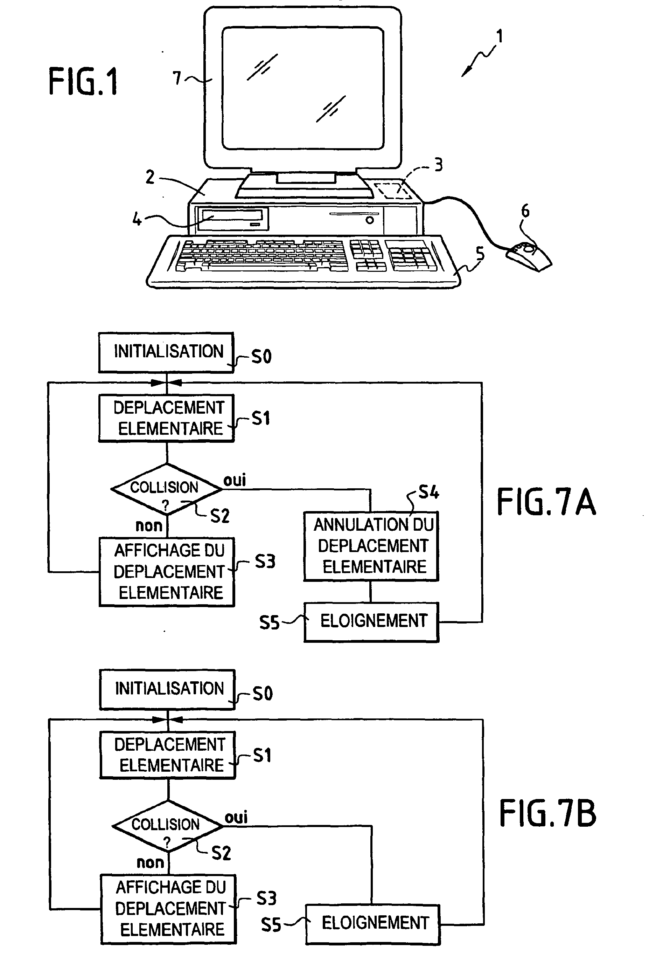

La figure 1 représente un système qui peut être utilisé pour la modélisation du déplacement d'un objet articulé. Ce système comprend une station de travail ou ordinateur 1 disposant de bonnes capacités graphiques, utilisé pour l'exécution d'un programme informatique conçu pour mettre en oeuvre le procédé selon l'invention.

L'ordinateur 1 comprend les moyens matériels que l'on trouve habituellement avec ce type d'appareil. Plus particulièrement, l'ordinateur comprend une unité centrale 2 qui exécute les séquences d'instructions du programme selon le procédé de l'invention, une mémoire centrale 3 qui stocke les données et programmes en cours d'exécution, des supports de stockages de données numériques (disque dur, CD 4, disquette,...) conservant durablement les données et les programmes manipulés, des périphériques d'entrée (clavier 5, souris « 2D » ou « 3D » 6, manette,...) ainsi que des périphériques de sortie (écran 7, casques ou lunettes stéréoscopiques,...) pour pouvoir visualiser le déplacement d'un objet articulé.

Bien entendu, afin d'augmenter la capacité de calcul, la modélisation selon l'invention peut être mise en oeuvre sur plusieurs stations de travail fonctionnant en parallèle.

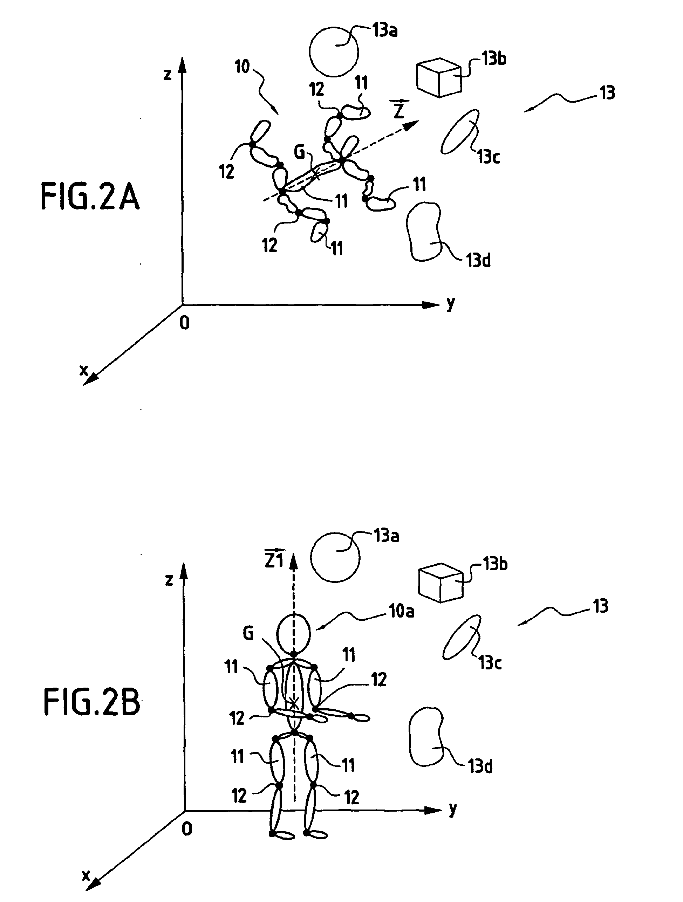

La figure 2A, illustre très schématiquement un objet articulé virtuel 10 caractérisé par une chaîne articulée arborescente. Ainsi l'objet articulé 10 est défini par un ensemble « d'objets passifs », c'est-à-dire des éléments 11 reliés entre eux par des articulations 12 qui peuvent être classées de façon connue, selon plusieurs chaînes d'articulations.

Un repère local dont l'origine est le centre de gravité G de l'objet articulé 10 peut être associé à ce dernier.

En particulier, le repère local peut comporter un seul axe Z passant par le centre de gravité G de l'objet articulé 10.

L'objet articulé 10 évolue dans un environnement virtuel 13 encombré par un certain nombre d'objets ou obstacles 13a, 13b, 13c, 13d que l'objet articulé 10 doit éviter lors de son déplacement. L'objet articulé 10 ainsi que son environnement sont définis dans un espace métrique (O ; x, y, z).

Grâce à cet espace métrique, la position et l'orientation de l'objet articulé 10 ainsi que les différents objets 13a, 13b, 13c, 13d de son environnement 13 peuvent être repérés, de façon simple.

Ainsi, l'objet articulé 10 peut être repéré à chaque instant dans l'environnement 13 par une position globale, une orientation globale et une pluralité d'angles d'articulation définissant la position de l'ensemble d'éléments articulés 11, selon une pluralité de degrés de liberté.

En effet, la position globale de l'objet articulé 10 peut être définie par les coordonnées cartésiennes selon les axes x, y, z de son centre de gravité G.

L'orientation globale peut être repérée de façon connue, par trois angles définissant l'orientation de l'axe $\vec{Z}$ associé à l'objet articulé par rapport aux axes x, y, z.

Bien entendu, il faut aussi prendre en compte, les paramètres ou contraintes imposés par les limites articulaires et par les liens physiques entre les différents membres ou éléments 11 de cet objet articulé 10.

Ces données et variables définissant l'objet articulé 10 ainsi que des paramètres définissant son environnement 13 sont stockés dans le support de données numériques 3 du système informatique 1.

La figure 2B montre qu'en particulier l'objet articulé peut être un mannequin virtuel 10a se déplaçant sur un sol de l'environnement virtuel 13.

Dans ce cas, le mannequin 10a peut être défini par sa position sur le sol virtuel, son orientation autour d'un axe vertical $\vec{Z1}$ perpendiculaire audit sol et passant par le centre de gravité G du mannequin 10a, et par une pluralité d'angles d'articulation définissant l'ensemble de ses éléments articulés.

De façon connue, l'objet articulé 10 tel qu'un mannequin 10a peut être déplacé dans l'environnement virtuel 13 selon une succession de mouvements élémentaires, pour par exemple atteindre une cible 13c.

Ainsi, pour générer une trajectoire permettant à l'objet articulé 10 d'atteindre sa cible 13c, il est possible d'agir sur la position globale de l'objet articulé 10 selon un pas prédéfini de déplacement en position $\Delta p$, et/ou l'orientation globale de l'objet articulé selon un pas prédéfini de déplacement en orientation $\Delta o$, et/ou la pluralité de degrés de liberté de l'objet articulé selon un pas prédéfini de déplacement en articulation $\Delta a$.

Ceci se traduit par l'attraction de l'objet articulé 10 vers sa cible 13c sans considération des dimensions de la cible 10c ou de tout autre objet 13a, 13b dans l'environnement 13.

Afin que l'objet articulé 10 évite les collisions avec son environnement 13, il est nécessaire de définir un critère de collision. Un tel critère peut être défini, de façon connue pour l'homme du métier, par le calcul d'une distance d'interaction entre l'objet articulé 10 et son environnement 13 qui fournit également les points réalisant cette distance d'interaction.

On notera que, la distance d'interaction peut correspondre à une distance minimale ou une profondeur de pénétration entre l'objet articulé 10 et son environnement.

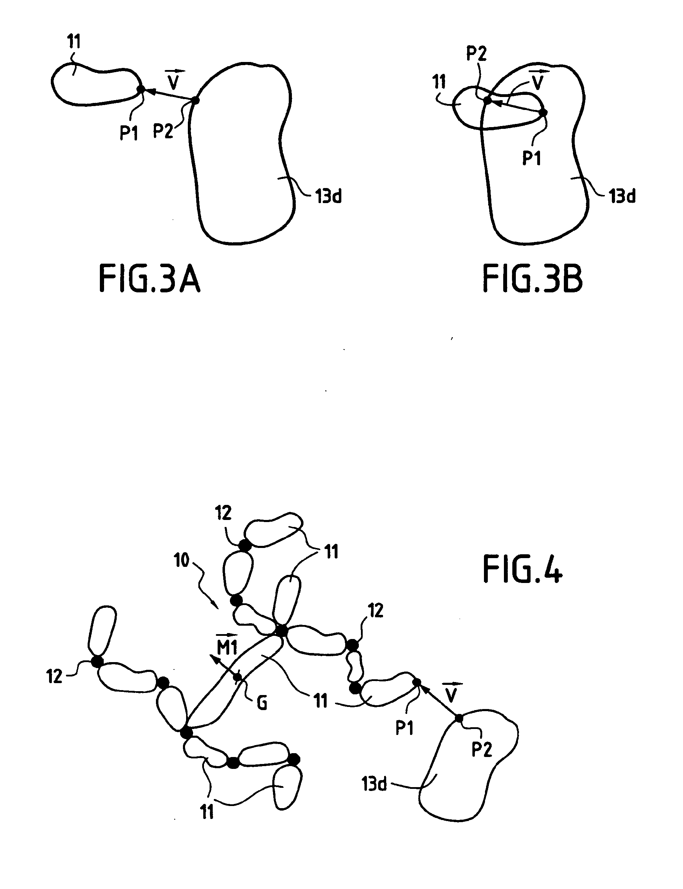

En effet, les figures 3A et 3B, illustrent la reconnaissance de la distance d'interaction entre un élément de l'objet articulé 10 et un objet 13d appartenant à l'environnement.

L'exemple de la figure 3A illustre plus particulièrement le critère de distance minimale entre l'objet articulé 10 et son environnement et les points P1 et P2 réalisant cette distance minimale.

Par ailleurs, l'exemple de la figure 3B illustre le critère de profondeur de pénétration entre l'objet articulé 10 et son environnement, définissant les points P1 et P2 réalisant cette profondeur de pénétration.

Ainsi, le calcul de la distance d'interaction permet d'extraire un point P1, désigné « premier point » dans la suite de la description, appartenant à un des éléments 11 de l'objet articulé 10 et un autre point P2, désigné « second point » dans la suite de la description, appartenant à l'environnement 13.

Il est alors possible de définir à partir de ces premier P1 et second P2 points, un vecteur d'extraction unique $\vec{V}$.

Selon le mode basé sur le calcul d'une distance minimale (figure 3A), le vecteur d'extraction $\vec{V}$ est égal aux coordonnées du premier point P1 moins celles du second point P2. Autrement dit, le second point P2 est l'origine du vecteur d'extraction $\vec{V}$ et le premier point P1 est l'extrémité du vecteur d'extraction $\vec{V}$

En revanche, selon le mode basé sur le calcul d'une profondeur de pénétration (figure 3B), le vecteur d'extraction $\vec{V}$ est égal aux coordonnées du second point P2 moins celles du premier point P1. Autrement dit, le premier point P1 est l'origine du vecteur d'extraction $\vec{V}$ et le second point P2 est l'extrémité du vecteur d'extraction $\vec{V}$.

Finalement, pour éviter une collision entre l'objet articulé 10 et l'environnement 13, cet objet articulé 10 peut être éloigné de son environnement selon un mouvement défini en fonction du vecteur d'extraction unique $\vec{V}$ et agissant sur la position globale, et/ou l'orientation globale, et/ou les degrés de liberté de l'objet articulé 10.

Les figures 4 à 6 illustrent les mouvements d'éloignement de l'objet articulé selon le mode de distance minimale, mais bien entendu le principe est le même selon le mode de profondeur de pénétration.

La figure 4 illustre un mouvement d'éloignement agissant sur la position globale de l'objet articulé.

Ainsi, l'éloignement de l'objet articulé 10 de son environnement 13 est réalisé selon un mouvement de translation $\vec{M1}$ proportionnel aux composantes du vecteur d'extraction $\vec{V}$ agissant sur la position globale de l'objet articulé, c'est-à-dire $\vec{M1} = \lambda \vec{V}$, $\lambda$ étant un coefficient positif.

En particulier, dans l'exemple d'un mannequin 10a où la position globale est définie dans un plan (x, y), alors on ne considère que la projection du vecteur d'extraction $\vec{V}$ sur ce plan.

Le mouvement de translation contribue ainsi à l'évitement de collision par un déplacement global de l'objet articulé 10.

On notera que, le vecteur d'extraction unique $\vec{V}$ calculé à partir d'une distance minimale ou de profondeur de pénétration peut être normé par la valeur du pas de déplacement élémentaire en position $\Delta p$, c'est-à-dire, le mouvement de translation $\vec{M1}$ est donné par l'équation suivante :

$$\vec{M1} = \vec{V}\big/_{\Delta p}$$

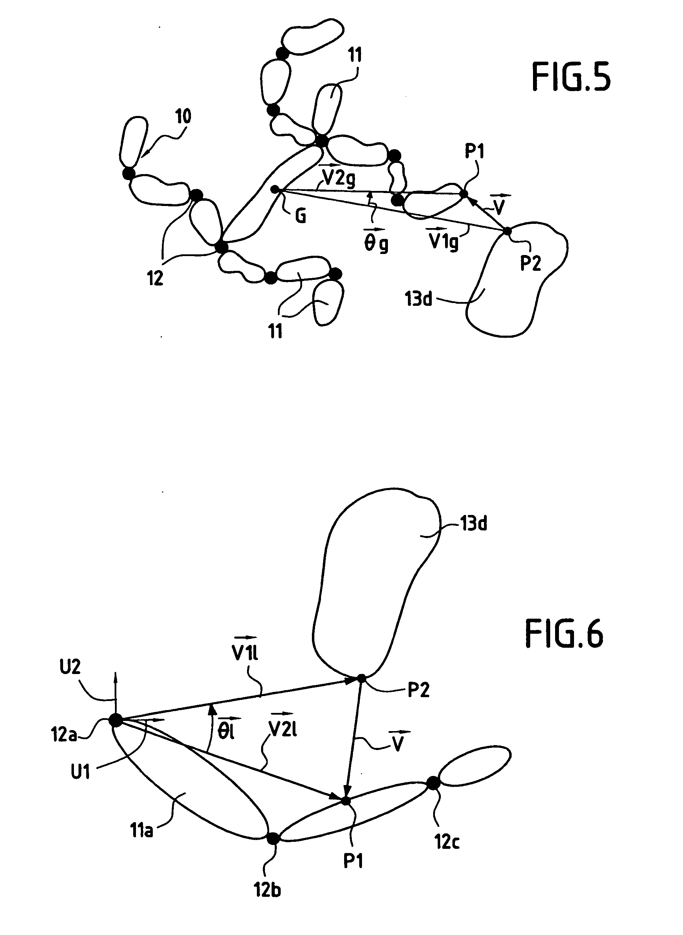

La figure 5 illustre un mouvement d'éloignement agissant sur l'orientation globale de l'objet articulé.

L'éloignement de l'objet articulé 10 de son environnement 13 est réalisé en déterminant la rotation à effectuer autour d'un point, par exemple le centre de gravité G, menant de l'objet articulé 10 pour déplacer le point d'application du vecteur d'extraction $\vec{V}$ sur l'objet articulé 10 suivant ce vecteur $\vec{V}$. Cette rotation est normée par la valeur du pas de déplacement en orientation $\Delta o$.

En effet, ce mouvement de rotation agissant sur l'orientation globale de l'objet articulé 10 peut être déterminé selon les étapes ci-dessous.

Un premier vecteur $\overrightarrow{V1g}$, désigné « premier vecteur global » dans la suite de la description, est défini entre le centre de gravité G de l'objet articulé 10 et l'origine du vecteur d'extraction $\overrightarrow{V}$. Selon cet exemple, l'origine du vecteur d'extraction $\overrightarrow{V}$ est le second point P2, mais serait le premier point P1 dans un mode de profondeur de pénétration.

De même, un second vecteur global $\overrightarrow{V2g}$ est défini entre le centre de gravité G de l'objet articulé 10 et l'extrémité P1 du vecteur d'extraction $\overrightarrow{V}$.

Ensuite, il est calculé un angle de rotation $\overrightarrow{\theta g}$, désigné « angle de rotation globale » dans la suite de la description, faisant coïncider le premier vecteur global $\overrightarrow{V1g}$ sur le second vecteur global $\overrightarrow{V2g}$. L'angle de rotation globale $\overrightarrow{\theta g}$ peut être calculé au moyen d'un produit vectoriel, désigné par la suite « produit vectoriel global » entre les premier $\overrightarrow{V1g}$ et second $\overrightarrow{V2g}$ vecteurs globaux. Ainsi, l'angle de rotation globale $\overrightarrow{\theta g}$ est donné par l'équation suivante :

$$\overrightarrow{\theta g} = \frac{\overrightarrow{V1g} \times \overrightarrow{V2g}}{\overrightarrow{V1g} \cdot \overrightarrow{V2g}}$$

Cet angle de rotation globale $\overrightarrow{\theta g}$ est décomposé en un ou des angles élémentaires $\theta gi$ de rotation globale suivant le ou les axes définissant l'orientation globale de l'objet articulé. Le ou les angles élémentaires $\theta gi$ de rotation globale peuvent être calculés au moyen d'un ou des produits scalaires entre le produit vectoriel global et le ou les axes de l'orientation globale.

Finalement, l'objet articulé 10 est tourné selon un ou des angles $\alpha$ proportionnels au dit ou aux dits angles élémentaires $\theta gi$ de rotation globale. En effet, les angles élémentaires $\theta gi$ de rotation globale sont normés par les valeurs correspondantes du pas de déplacement en orientation $\Delta o$, c'est-à-dire $\alpha = {\theta gi}/{\Delta o}$.

En particulier, lorsque l'orientation globale de l'objet articulé est définie par un seul axe $\overrightarrow{Z}$ comme dans l'exemple de la figure 2, alors il en résulte un seul angle élémentaire normé $\alpha$ de rotation globale définissant le mouvement de rotation de l'objet articulé autour de cet axe $\overrightarrow{Z}$ donné par l'équation suivante :

$$\alpha = \sin^{-1} \frac{\overrightarrow{Z} \cdot \overrightarrow{\theta g}}{\Delta o}$$

La figure 6, illustre un mouvement de rotation articulaire agissant au niveau de degrés de liberté de l'objet articulé.

On notera que l'éloignement de l'objet articulé 10 de son environnement 13 est réalisé selon un mouvement de rotation articulaire agissant au niveau de chacune des articulations 12 appartenant à une chaîne d'articulations qui précèdent l'élément 11 de l'objet articulé auquel appartient le premier point P1 défini ci-avant (voir figures 2A et 2B).

A titre d'exemple, si l'objet articulé est un mannequin virtuel 10a et si la distance d'interaction entre le mannequin 10a et l'environnement 13 est réalisée par un premier point P1 sur l'avant-bras, alors la chaîne d'articulations correspond au coude, épaule et clavicule. Autrement dit, le mouvement de rotation articulaire est calculé pour agir sur toutes les articulations 12 du bras qui précèdent l'avant bras. Par ailleurs, si le premier point P1 appartient au bras, alors la chaîne d'articulation comporterait seulement les articulations de l'épaule et de la clavicule. Si le premier point P1 appartient à la main alors toutes les articulations 12 du bras seraient considérées, c'est-à-dire que la chaîne d'articulation comporterait le poignet, le coude, l'épaule et la clavicule.

Ainsi, pour un objet articulé 10 donné, la chaîne d'articulation dépend de l'élément 11 de l'objet articulé 10 qui comporte le premier point P1.

En particulier, l'exemple de la figure 6, montre le mouvement de rotation articulaire agissant au niveau d'une articulation donnée 12a faisant partie d'une chaîne d'articulations 12a, 12b, et 12c.

En effet, ce mouvement de rotation articulaire agissant au niveau d'une articulation donnée 12a, peut être déterminé selon les étapes ci-dessous.

Un premier vecteur $\overrightarrow{V1l}$, désigné « premier vecteur local » dans la suite de la description, est défini entre le centre d'articulation de ladite articulation donnée 12a et l'origine P2 du vecteur d'extraction $\overrightarrow{V}$

De même, un second vecteur local $\overrightarrow{V2l}$ est défini entre le centre d'articulation de ladite articulation donnée 12a et l'extrémité P1 du vecteur d'extraction $\overrightarrow{V}$

Ensuite, il est calculé un angle de rotation $\overrightarrow{\theta l}$, désigné « angle de rotation local » dans la suite de la description, faisant coïncider le premier vecteur local $\overrightarrow{V1l}$ sur le second vecteur local $\overrightarrow{V2l}$. L'angle de rotation local $\overrightarrow{\theta l}$ peut être calculé au moyen d'un produit vectoriel, désigné par la suite « produit vectoriel local » entre les premier $\overrightarrow{V1l}$ et second $\overrightarrow{V2l}$ vecteurs locaux selon la formule ci-dessous :

$$\overrightarrow{\theta l} = \frac{\overrightarrow{V1l} \times \overrightarrow{V2l}}{\overrightarrow{V1l} \cdot \overrightarrow{V2l}}$$

Cet angle de rotation local $\overrightarrow{\theta l}$ est décomposé en un ou des angles élémentaires $\theta li$ de rotation articulaire suivant le ou les axes $\overrightarrow{Ui}$ définissant le ou les degrés de liberté correspondant à ladite articulation donnée 12a de l'objet articulé 10. Selon cet exemple, l'articulation donnée 12a comporte deux axes $\overrightarrow{U1}$ et $\overrightarrow{U2}$. Le ou les angles élémentaires $\theta li$ de rotation articulaire peuvent être calculés au moyen d'un ou des produits scalaires entre le produit vectoriel local et le ou les axes $\overrightarrow{Ui}$ de degré de liberté de l'articulation donnée 12a.

Finalement, l'élément articulé au niveau de ladite articulation donnée est tourné selon un ou des angles $\alpha i$ proportionnels au dit ou aux dits angles élémentaires $\theta li$ d'articulation.

En effet, les angles élémentaires $\theta li$ d'articulation sont normés par les valeurs correspondantes du pas de déplacement en articulation $\Delta o$.

L'élément articulé au niveau de ladite articulation donnée est tourné selon un ou des angles $\alpha i$ donnés par la formule suivante :

$$\alpha i = \sin^{-1} \frac{\overrightarrow{Ui} \cdot \overrightarrow{\theta l}}{\Delta a}$$

Bien entendu les mêmes étapes ci-dessus, doivent être effectuées pour toutes les articulations 12a, 12b, et 12c composant la chaîne d'articulations considérée.

Ainsi, l'utilisation d'un vecteur d'extraction unique $\overrightarrow{V}$ calculé à partir d'une distance minimale ou d'une profondeur de pénétration permet d'améliorer sensiblement la procédure d'évitement de collision entre l'objet articulé 10 et l'environnement 13.

En effet, la présente invention permet de réduire considérablement le nombre de calculs de distance minimale ou de profondeur de pénétration, qui sont très demandeurs en temps de calcul, par rapport aux calculs de gradients de l'art antérieur et sans affecter la précision d'évitement de collision entre l'objet articulé et l'environnement.

La figure 7A est un organigramme illustrant les étapes principales modélisant le déplacement de l'objet articulé en évitant les collisions entre ce dernier et l'environnement.

L'étape S0 est une initialisation de l'organigramme où différents paramètres sont définis. Par exemple, un compteur de cadencement des impulsions ou étapes de calcul de la modélisation est initialisé.

De même, les mouvements élémentaires ou pas de déplacement en position $\Delta p$, en orientation $\Delta o$, et en articulation $\Delta a$ peuvent aussi être définis à l'étape S0. On peut par exemple attribuer des pas différents selon la nature de l'articulation 12. On peut aussi choisir un pas constant optimal pour toutes les articulations 12 et tout au long de la trajectoire de l'objet articulé 10.

A l'étape S1, un calcul d'un mouvement élémentaire de l'objet articulé 10 est réalisé.

L'étape S2 est un test pour déterminer s'il y a collision ou non entre l'objet articulé 10 et l'environnement 13. Le critère de collision dépend de la valeur de la distance d'interaction.

Autrement dit, pour le mode basé sur la distance minimale, on peut considérer qu'une collision est survenue, si cette distance minimale est inférieure ou égale à une distance minimale seuil qui peut être égal à zéro afin de permettre le déplacement de l'objet articulé 10

sans collision avec son environnement 13.

En revanche, pour le mode basé sur la profondeur de pénétration, on peut considérer qu'une collision est survenue, si cette profondeur est supérieure ou égale à une profondeur de pénétration seuil. Ainsi, selon le choix de cette valeur seuil, on peut d'une part, permettre le déplacement de l'objet articulé 10 sans collision avec son environnement 13 ou d'autre part, permettre le déplacement de l'objet articulé 10 avec une collision limitée et contrôlée avec son environnement 13. Ce dernier cas permet de modéliser une certaine plasticité lorsque l'objet articulé 10 est en contact avec un objet de l'environnement 13.

S'il n'y a pas de collision selon le critère de l'étape précédente S2, alors à l'étape S3 on affiche par exemple sur l'écran 7 de l'ordinateur 1, le déplacement de l'objet articulé 10 calculé à l'étape S1 avant de revenir à cette même étape S1 pour calculer un déplacement élémentaire suivant.

Ainsi, à l'étape S3, les étapes d'extraction des premier et second points, de définition du vecteur d'extraction et d'éloignement de l'objet articulé 10 de l'environnement 13 ne sont pas exécutées.

En revanche, s'il y a collision alors on annule à l'étape S4, le déplacement élémentaire calculé à l'étape S1.

Ensuite, à l'étape S5, on calcule le mouvement défini en fonction du vecteur d'extraction unique et agissant sur la position globale, et/ou l'orientation globale, et/ou les degrés de liberté de l'objet articulé pour éloigner l'objet articulé 10 de son environnement 13, avant de boucler à l'étape S1.

La figure 7B est une variante de la figure 7A qui est valable uniquement dans le mode de calcul utilisant la profondeur de pénétration.

L'organigramme de cette figure est le même que celui de la figure 7A, sauf que l'étape S4 n'existe plus.

Ainsi, lorsqu'il y a une collision à l'étape S2, on passe toute suite à l'étape S5 de l'éloignement de l'objet articulé 10 de son environnement 13, sans l'annulation du dernier déplacement élémentaire, permettant ainsi une légère pénétration entre l'objet articulé 10 et son environnement 13.

Le déplacement de l'objet articulé virtuel 10 dans un environnement virtuel 13 peut être mis en oeuvre au moyen d'un système « multi-agent » ou d'un tout autre système connu.

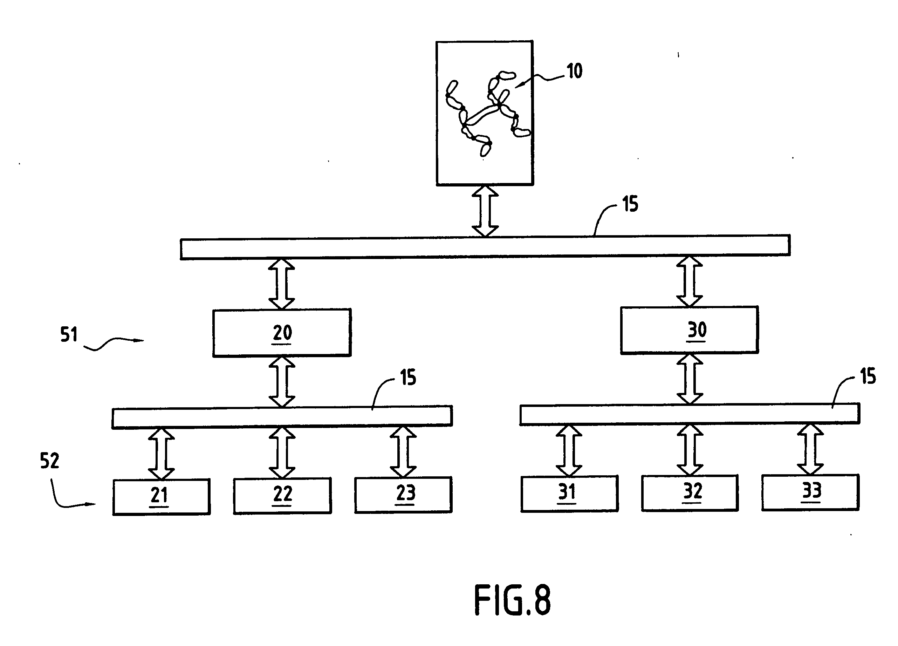

En effet, la figure 8 illustre très schématiquement, une architecture d'un système multi-agent 50 qui peut être utilisée pour modéliser le déplacement d'un objet articulé 10. Ce système multi-agent 50 est composé d'un ensemble d'éléments actifs ou agents 20, 21, 22, 23, 30, 31, 32, et 33 qui agissent sur les objets passifs (éléments 11 et articulations 12) composant l'objet articulé 10 en fonction de son environnement.

Les données ou variables définissant l'objet articulé 10 et son environnement constituent des données partagées 15 au travers desquelles les différents agents interagissent.

L'architecture du système multi-agent peut être organisée en plusieurs étages ou niveaux, de façon pyramidale, de sorte que les agents de base contribuent aux actions de ceux qui sont sur un niveau plus élevé.

Dans cet exemple, le système multi-agent 50 présente un premier niveau 51 et un deuxième niveau 52.

Le premier niveau 51 illustre l'action ou la contribution globale sur l'objet articulé 10 et comporte la contribution d'un premier agent global 20 et la contribution d'un second agent global 30 agissant sur l'objet articulé 10 par le biais des données partagées 15.

Le premier agent global 20 agit sur la position et orientation globales de l'objet articulé 10 et le second agent global 30 agit sur les degrés de liberté internes d'articulation 12 de l'objet articulé 10.

Le deuxième niveau 52 illustre différentes contributions, émanant des différents types d'agents qui engendrent les contributions des premier et second agents globaux 20 et 30 en interagissant à travers les données partagées 15.

Ainsi, le déplacement de l'objet articulé 10 peut être mis en oeuvre au moyen d'un agent d'attraction agissant sur la position globale, et/ou l'orientation globale, et/ou la pluralité de degrés de liberté de l'objet articulé.

Par ailleurs, l'éloignement de l'objet articulé de son environnement peut être mis en oeuvre au moyen d'un agent de glissement agissant sur la position globale, et/ou l'orientation globale, et/ou la pluralité de degrés de liberté de l'objet articulé.

Ainsi, le deuxième niveau 52 du système multi-agent 50 peut comporter un agent de glissement répulsif 21 agissant sur la position et/ou orientation globale de l'objet articulé 10, un agent d'attraction globale 22 agissant sur la position et/ou orientation globale de l'objet articulé 10, un agent de glissement cinématique 31 agissant sur les degrés de liberté internes d'articulation 12 de l'objet articulé 10, et un agent d'attraction cinématique 32 agissant sur les degrés de liberté internes d'articulation 12 de l'objet articulé 10.

De plus, l'objet articulé 10 peut être déplacé en temps réel par un opérateur au moyen d'un agent d'opérateur agissant sur la position et/ou l'orientation et/ou la pluralité de degrés de l'objet articulé.

Ainsi, le deuxième niveau 52 du système multi-agent 50 peut aussi comporter un agent d'opérateur global 23 agissant sur la position et/ou orientation globale de l'objet articulé 10, et un agent d'opérateur interne 33 agissant sur les degrés de liberté internes d'articulation 12 de l'objet articulé 10.

## Revendications

1. Procédé de déplacement d'un objet articulé virtuel (10) selon une succession de mouvements élémentaires dans un environnement virtuel (13), l'objet articulé (10) étant repéré dans cet environnement (13) par une position globale, une orientation globale et une pluralité d'angles d'articulation définissant la position d'un ensemble d'éléments articulés (11) composant ledit objet articulé, selon une pluralité de degrés de liberté, le procédé comportant les étapes suivantes :

   - calculer une distance d'interaction entre l'objet articulé (10) et son environnement (13) ;
   - extraire de ladite distance d'interaction, un premier point (P1) appartenant à un des éléments (11) de l'objet articulé (10) et un second point (P2) appartenant à l'environnement (13) ;
   - définir un vecteur d'extraction unique ($\vec{V}$) à partir desdits premier et second points (P1, P2); et
   - éloigner l'objet articulé (10) de son environnement (13) selon un mouvement défini en fonction du vecteur d'extraction unique ($\vec{V}$), le mouvement d'éloignement étant réalisé selon un mouvement de translation agissant sur la position globale de l'objet articulé, et un mouvement de rotation agissant sur l'orientation globale de l'objet articulé, et un mouvement de rotation articulaire agissant au niveau de chacune des articulations appartenant à une chaîne d'articulations qui précèdent l'élément de l'objet articulé auquel appartient ledit premier point ;

   **caractérisé en** en ce que le calcul du mouvement de rotation agissant sur l'orientation globale de l'objet articulé (10) comporte les étapes suivantes :

   - définir un premier vecteur global ($\overrightarrow{V1g}$) entre le centre de gravité (G) de l'objet articulé (10) et l'origine du vecteur d'extraction ($\vec{V}$);
   - définir un second vecteur global ($\overrightarrow{V2g}$) entre le centre de gravité (G) de l'objet articulé (10) et l'extrémité du vecteur d'extraction ($\vec{V}$) ;
   - calculer un angle de rotation globale ($\vec{\theta g}$) faisant coïncider le premier vecteur global sur le second vecteur global ;
   - calculer un ou des angles élémentaires de rotation globale en décomposant ledit angle de rotation globale suivant le ou les axes définissant l'orientation globale de l'objet articulé (10); et
   - tourner l'objet articulé (10) selon un ou des angles proportionnels au dit ou aux dits angles élémentaires de rotation globale.

2. Procédé selon la revendication 1, **caractérisé en ce qu'**il comporte en outre une étape déterminant après chaque mouvement élémentaire de ladite succession de mouvements élémentaires si une collision est survenue entre l'objet articulé (10) et son environnement (13).

3. Procédé selon l'une quelconque des revendications 1 et 2, **caractérisé en ce que** la distance d'interaction correspond à une profondeur de pénétration, de sorte que le vecteur d'extraction ($\vec{V}$) est égal aux coordonnées du second point (P2) moins celles du premier point (P1), la profondeur de pénétration permettant le déplacement de l'objet articulé (10) avec une collision limitée et contrôlée avec son environnement (13).

4. Procédé selon l'une quelconque des revendications 1 et 2, **caractérisé en ce que** la distance d'interaction correspond à une distance minimale, de sorte que le vecteur d'extraction ($\vec{V}$) est égal aux coordonnées du premier point (P1) moins celles du second point (P2), la distance minimale permettant le déplacement de l'objet articulé (10) sans collision avec son environnement (13).

5. Procédé selon l'une quelconque des revendications 1 à 4, **caractérisé en ce qu'**il comporte en outre une étape d'annulation du dernier mouvement élémentaire de ladite succession de mouvements élémentaires lorsqu'une collision est survenue entre l'objet articulé (10) et son environnement (13).

6. Procédé selon l'une quelconque des revendications 1 à 4, **caractérisé en ce que** lesdites étapes d'extraction des premier et second points (P1, P2), de définition du vecteur d'extraction ($\vec{V}$) et d'éloignement de l'objet articulé (10), ne sont pas exécutées lorsqu'une collision n'est pas survenue entre l'objet articulé (10) et l'environnement (13).

7. Procédé selon l'une quelconque des revendications 1 à 5, **caractérisé en ce que** le mouvement de translation est proportionnel aux composantes du vecteur d'extraction ($\vec{V}$) agissant sur la position globale de l'objet articulé (10).

8. Procédé selon l'une quelconque des revendications 1 à 5, **caractérisé en ce que** le mouvement de rotation articulaire agissant au niveau d'une articulation donnée (12a) de chacune des articulations appartenant à la chaîne d'articulations qui précédent l'élément de l'objet articulé auquel appartient ledit premier point comporte les étapes suivantes :

- définir un premier vecteur local ($\vec{V1}$) entre le centre d'articulation de ladite articulation donnée (12a) et l'origine du vecteur d'extraction ($\vec{V}$);
- définir un second vecteur local ($\vec{V2}$) entre le centre d'articulation de ladite articulation donnée et l'extrémité du vecteur d'extraction ($\vec{V}$) ;
- calculer un angle de rotation locale ($\vec{\theta l}$) faisant coïncider le premier vecteur local sur le second vecteur local ;
- calculer un ou des angles élémentaires de rotation articulaire en décomposant ledit angle de rotation locale suivant le ou les axes définissant le ou les degrés de liberté correspondant audite articulation donnée ; et
- tourner l'élément articulé (10) au niveau de ladite articulation donnée selon un ou des angles proportionnels au dit ou aux dits angles élémentaires d'articulation.

9. Procédé selon l'une quelconque des revendications 1 à 8, **caractérisé en ce que** l'angle de rotation globale ($\vec{\theta g}$) est calculé au moyen d'un produit vectoriel global entre les premier et second vecteurs globaux, et l'angle de rotation locale ($\vec{\theta l}$) est calculé au moyen d'un produit vectoriel local entre les premier et second vecteurs locaux.

10. Procédé selon l'une quelconque des revendications 1 à 9, **caractérisé en ce que** le ou les angles élémentaires de rotation globale sont calculés au moyen d'un ou des produits scalaires entre le produit vectoriel global et le ou les axes de l'orientation globale, et le ou les angles élémentaires d'articulation sont calculés au moyen d'un ou des produits scalaires entre le produit vectoriel local et le ou les axes de degré de liberté de l'articulation donnée.

11. Procédé selon l'une quelconque des revendications 1 à 10, **caractérisé en ce que** le déplacement de l'objet articulé (10) est mis en oeuvre au moyen d'un agent d'attraction (22, 32) agissant sur la position globale, et/ou l'orientation globale, et/ou la pluralité de degrés de liberté de l'objet articulé.

12. Procédé selon l'une quelconque des revendications 1 à 11, **caractérisé en ce que** l'éloignement de l'objet articulé de son environnement est mis en oeuvre au moyen d'un agent de glissement (21, 31) agissant sur la position globale, et/ou l'orientation globale, et/ou la pluralité de degrés de liberté de l'objet articulé.

13. Procédé selon l'une quelconque des revendications 1 à 12, **caractérisé en ce que** le procédé comporte en outre une étape de déplacement de l'objet articulé (10) en temps réel par un opérateur au moyen d'un agent d'opérateur (23, 33) agissant sur la position et/ou l'orientation et/ou la pluralité de degrés de l'objet articulé.

14. Procédé selon l'une quelconque des revendications 1 à 13, **caractérisé en ce que** l'objet articulé (10) est un mannequin virtuel (10a) se déplaçant sur un sol de l'environnement virtuel, le mannequin étant défini par une position sur le sol virtuel, une orientation autour d'un axe vertical perpendiculaire au dit sol et passant par le centre de gravité du mannequin, et la pluralité d'angles d'articulation définissant l'ensemble de ses éléments articulés.

**15.** Programme informatique **caractérisé en ce qu'**il est conçu pour mettre en oeuvre le procédé selon l'une quelconque des revendications 1 à 14 lorsqu'il est exécuté par un ordinateur (1).

**Claims**

**1.** A method of moving a virtual articulated object (10) in a succession of unit movements in a virtual environment (13), the articulated object (10) being specified in said environment (13) by a global position, a global orientation, and a plurality of joint angles defining the positions of a set of articulated elements (11) making up said articulated object with a plurality of degrees of freedom, the method comprising the following steps:

· calculating an interaction distance between the articulated object (10) and its environment (13); extracting from said interaction distance a first point (P1) belonging to one of the elements (11) of the articulated object (10), and a second point (P2) belonging to the environment (13);
· defining a single extraction vector ($\vec{V}$) from said first and second points (P1, P2); and
· moving the articulated object (10) away from its environment (13) by a movement defined as a function of the single extraction vector ($\vec{V}$), the separation movement being implemented by a movement in translation acting on global position of the articulated object, and/or a movement in rotation acting on the global orientation of the articulated object, and/or a joint-flexing movement acting on each of the joints belonging to a chain of joints preceding the element of the articulated object to which said first point belongs ;

**characterized in that** the computation of the movement in rotation acting on the global orientation of the articulated object (10) comprises the following steps:

· defining a first global vector ($\vec{V1g}$) between the center of gravity (G) of the articulated object and the origin of the extraction vector ($\vec{V}$);
· defining a second global vector ($\vec{V2g}$) between the center of gravity (G) of the articulated object (10) and the end of the extraction vector ($\vec{V}$);
· calculating a global angle of rotation ($\vec{\theta g}$) causing the first global vector to coincide with the second global vector;
· calculating one or more elementary angles of global rotation by resolving said global angle of rotation about the axis or axes defining the global orientation of the articulated object (10) ; and
· turning the articulated object (10) through one or more angles proportional to said elementary angle(s) of global rotation.

**2.** A method according to claim 1, **characterized in that** it further comprises a step after each unit movement in said succession of unit movements of determining whether a collision has occurred between the articulated object (10) and its environment (13).

**3.** A method according to any one of claims 1 and 2, **characterized in that** the interaction distance corresponds to a penetration depth, such that the extraction vector ($\vec{V}$) is equal to the coordinates of the second point (P2) minus the coordinates of the first point (P1), the penetration depth enabling the articulated object (10) to move with limited and controlled amounts of collision with its environment (13) .

**4.** A method according to any one of claims 1 and 2, **characterized in that** the interaction distance corresponds to a minimum distance, such that the extraction vector ($\vec{V}$) is equal to the coordinates of the first point (P1) minus the coordinates of the second point (P2), the minimum distance enabling the articulated object (10) to move without collision with its environment (13).

**5.** A method according to any one of claims 1 to 4, **characterized in that** it further comprises a step of canceling the most recent unit movement of said succession of unit movements in the event of a collision arising between the articulated object (10) and its environment (13).

**6.** A method according to any one of claims 1 to 4, **characterized in that** said steps of extracting the first and second points (P1, P2), of defining the extraction vector ($\vec{V}$), and of moving the articulated object (10) away, are not executed whenever a collision does not occur between the articulated object (10) and the environment (13).

**7.** A method according to any one of claims 1 to 5, **characterized in that** the movement in translation is proportional to the components of the extraction vector (V) acting on the global position of the articulated object (10).

**8.** A method according to any on of claims 1 to 5, **characterized in that** the joint-flexing movement acting on each given joint (12a) of the joint belonging to the chain of joints preceding the element of the articulated object to which said first point belongs, comprising the following steps:

· defining a first local vector $\vec{V1\ell}$ between the articulation center of said given joint (12a) and the origin of the extraction vector ($\vec{V}$);
· defining a second local vector $\vec{V2\ell}$ between

the articulation center of said given joint at the end of the extraction vector ($\vec{V}$);

· calculating a local angle of rotation ($\vec{\theta\ell}$) for causing the first local vector to coincide with the second local vector;

· calculating one or more elementary joint rotation angles by resolving said local angle of rotation onto the axis or axes defining the degree(s) of freedom corresponding to said given joint; and

· turning the articulated element (10) at said given joint through angle(s) proportional to said elementary joint angle(s).

9. A method according to any one of claims 1 to 8, **characterized in that** the global angle of rotation ($\vec{\theta g}$) is calculated by means of a global vector product between the first and second global vectors, and the local angle of rotation ($\vec{\theta\ell}$) is calculated by means of a local vector product between the first and second local vectors.

10. A method according to any one of claims 1 to 9, **characterized in that** the elementary angle(s) of global rotation is/are calculated by means of one or more scalar products between the global vector product and the global orientation axis(es), and the individual joint angle(s) is/are calculated by means of one or more scalar products between the local vector products and the axis or axes of the degree(s) of freedom of the given joint.

11. A method according to any one of claims 1 to 10, **characterized in that** the articulated object (10) is moved by means of an attracter agent (22, 32) acting on the global position, and/or the global orientation, and/or the plurality of degrees of freedom of the articulated object.

12. A method according to any one of claims 1 to 11, **characterized in that** the articulated object (10) is moved away from its environment by means of an avoider agent (21, 31) acting on the global position, and/or the global orientation, and/or the plurality of degrees of freedom of the articulated object.

13. A method according to any one of claims 1 to 12, **characterized in that** the method further comprises a step of an operator moving the articulated object (10) in real time by means of an operator agent (23, 33) acting on the position and/or the orientation and/or the plurality of degrees of freedom of the articulated object.

14. A method according to any one of claims 1 to 13, **characterized in that** the articulated object (10) is a virtual dummy moving on a floor of a virtual environment, the dummy being defined by a position on the virtual floor, by an orientation about a vertical axis perpendicular to said floor and passing through the center of gravity of the dummy, and by the plurality of joint angles defining the set of articulated elements.

15. A computer program, **characterized in that** it is designed to implement the method according to any one of claims 1 to 14 when executed by a computer (1).

**Patentansprüche**

1. Verfahren zum Verschieben eines virtuellen Gliederobjekts (10) gemäß einer Aufeinanderfolge von elementaren Bewegungen in einer virtuellen Umgebung (13), wobei das Gliederobjekt (10) in dieser Umgebung (13) durch eine globale Position geortet wird, wobei eine globale Ausrichtung und eine Vielzahl von Gelenkwinkeln die Position einer Gesamtheit von Gliederelementen (11), aus denen das Gliederobjekt besteht, nach einer Vielzahl von Freiheitsgraden definieren, wobei das Verfahren die folgenden Schritte umfaßt:

- Berechnen eines Interaktionsabstands zwischen dem Gliederobjekt (10) und seiner Umgebung (13),
- Extrahieren eines ersten Punktes (P1), der einem der Elemente (11) des Gliederobjekts (10) angehört, und eines zweiten Punktes (P2), der der Umgebung (13) angehört, aus dem Interaktionsabstand,
- Definieren eines eindeutigen Extraktionsvektors ($\vec{V}$) aus dem ersten und dem zweiten Punkt (P1, P2) und
- Entfernen des Gliederobjekts (10) von seiner Umgebung (13) gemäß einer definierten Bewegung in Abhängigkeit von dem eindeutigen Extraktionsvektor ($\vec{V}$), wobei die Entfernungsbewegung gemäß einer Translationsbewegung, die auf die globale Position des Gliederobjekts wirkt, und einer Rotationsbewegung, die auf die globale Ausrichtung des Gliederobjekts wirkt, und einer Gelenkrotationsbewegung im Bereich jedes der Gelenke erfolgt, die einer Gelenkkette angehören, die vor dem Element des Gliederobjekts, dem der erste Punkt angehört, angeordnet sind,

**dadurch gekennzeichnet, daß** das Berechnen der Rotationsbewegung, die auf die globale Ausrichtung des Gliederobjekts (10) wirkt, die folgenden Schritte umfaßt:

- Definieren eines ersten globalen Vektors ($\vec{V1g}$) zwischen dem Schwerpunkt (G) des Gliederobjekts (10) und dem Ursprung des Extraktionsvektors ($\overrightarrow{V}$),

- Definieren eines zweiten globalen Vektors ($\overrightarrow{V2g}$) zwischen dem Schwerpunkt (G) des Gliederobjekts (10) und dem Ende des Extraktionsvektors ($\overrightarrow{V}$),

- Berechnen eines globalen Rotationswinkels ($\overrightarrow{\theta g}$, der den ersten globalen Vektor mit dem zweiten globalen Vektor zusammenfallen läßt,

- Berechnen eines oder mehrerer elementarer globaler Rotationswinkel durch Zerlegen des globalen Rotationswinkels entlang der Achse (n), die die globale Ausrichtung des Gliederobjekts (10) definiert(en), und

- Drehen des Gliederobjekts (10) nach einem oder mehreren Proportionalwinkeln zu dem oder den elementaren globalen Rotationswinkel (n).

**2.** Verfahren nach Anspruch 1, **dadurch gekennzeichnet, daß** es ferner einen Schritt umfaßt, der nach jeder elementaren Bewegung der Aufeinanderfolge von elementaren Bewegungen bestimmt, ob eine Kollision zwischen dem Gliederobjekt (10) und seiner Umgebung (13) stattgefunden hat.

**3.** Verfahren nach einem der Ansprüche 1 und 2, **dadurch gekennzeichnet, daß** der Interaktionsabstand einer Eindringtiefe entspricht, so daß der Extraktionsvektor ($\overrightarrow{V}$) gleich den Koordinaten des zweiten Punktes (P2) weniger jenen des ersten Punktes (P1) ist, wobei die Eindringtiefe die Verschiebung des Gliederobjekts (10) mit einer begrenzten und kontrollierten Kollision mit seiner Umgebung (13) ermöglicht.

**4.** Verfahren nach einem der Ansprüche 1 und 2, **dadurch gekennzeichnet, daß** der Interaktionsabstand einem Mindestabstand entspricht, so daß der Extraktionsvektor ($\overrightarrow{V}$) gleich den Koordinaten des ersten Punktes (P1) weniger jenen des zweiten Punktes (P2) ist, wobei der Mindestabstand die Verschiebung des Gliederobjekts (10) ohne Kollision mit seiner Umgebung (13) ermöglicht.

**5.** Verfahren nach einem der Ansprüche 1 bis 4, **dadurch gekennzeichnet, daß** es ferner einen Schritt des Annullierens der letzten elementaren Bewegung der Aufeinanderfolge von elementaren Bewegungen umfaßt, wenn eine Kollision zwischen dem Gliederobjekt (10) und seiner Umgebung (13) stattgefunden hat.

**6.** Verfahren nach einem der Ansprüche 1 bis 4, **dadurch gekennzeichnet, daß** die Schritte des Extrahierens des ersten und des zweiten Punktes (P1, P2), des Definierens des Extraktionsvektors ($\overrightarrow{V}$) und des Entfernens des Gliederobjekts (10) nicht ausgeführt werden, wenn keine Kollision zwischen dem Gliederobjekt (10) und der Umgebung (13) stattgefunden hat.

**7.** Verfahren nach einem der Ansprüche 1 bis 5, **dadurch gekennzeichnet, daß** die Translationsbewegung proportional zu den Komponenten des Extraktionsvektors ($\overrightarrow{V}$) ist, der auf die globale Position des Gliederobjekts (10) wirkt.

**8.** Verfahren nach einem der Ansprüche 1 bis 5, **dadurch gekennzeichnet, daß** die Gelenkrotationsbewegung, die im Bereich eines gegebenen Gelenks (12a) jedes der Gelenke wirkt, die der Gelenkkette angehören, die vor dem Element des Gliederobjekts angeordnet ist, dem der erste Punkt angehört, die folgenden Schritte umfaßt:

- Definieren eines ersten lokalen Vektors ($\overrightarrow{V1l}$) zwischen der Gelenkmitte des gegebenen Gelenks (12a) und dem Ursprung des Extraktionsvektors ($\overrightarrow{V}$),

- Definieren eines zweiten lokalen Vektors ($\overrightarrow{V1l}$) zwischen der Gelenkmitte des gegebenen Gelenks und dem Ende des Extraktionsvektors ($\overrightarrow{V}$),

- Berechnen eines lokalen Rotationswinkels ($\overrightarrow{\theta l}$), der den ersten lokalen Vektor mit dem zweiten lokalen Vektor zusammenfallen läßt,

- Berechnen eines oder mehrerer elementarer Gelenkrotationswinkel durch Zerlegen des lokalen Rotationswinkels entlang der oder den Achse(n), die den oder die Freiheitsgrad(e), die dem gegebenen Gelenk entsprechen, definieren, und

- Drehen des Gliederelements (10) im Bereich des gegebenen Gelenks nach einem oder mehreren Winkel(n) proportional zu dem oder den elementaren Gelenkwinkel(n).

**9.** Verfahren nach einem der Ansprüche 1 bis 8, **dadurch gekennzeichnet, daß** der globale Rotationswinkel ($\overrightarrow{\theta g}$) mit Hilfe eines globalen vektoriellen Produkts zwischen dem ersten und dem zweiten globalen Vektor berechnet wird, und der lokale Rotationswinkel ($\overrightarrow{\theta l}$) mit Hilfe eines lokalen vektoriellen Produkts zwischen dem ersten und dem zweiten lokalen Vektor berechnet wird.

**10.** Verfahren nach einem der Ansprüche 1 bis 9, **dadurch gekennzeichnet, daß** der oder die elementare/n globale/n Rotationswinkel mit Hilfe eines oder mehrerer Skalarprodukte zwischen dem globalen vektoriellen Produkt und der oder den Achse/n der globalen Ausrichtung berechnet wird/werden, und der oder die elementare/n Gelenkwinkel mit Hilfe eines oder mehrerer Skalarprodukte zwischen dem lokalen vektoriellen Produkt und der oder den Achse/n des Freiheitsgrades des gegebenen Gelenks berechnet wird/werden.

**11.** Verfahren nach einem der Ansprüche 1 bis 10, **dadurch gekennzeichnet, daß** die Verschiebung des Gliederobjekts (10) mit Hilfe eines Anziehungsmittels (22, 32) eingesetzt wird, das auf die globale Position und/oder die globale Ausrichtung und/oder die Vielzahl von Freiheitsgraden des Gliederobjekts wirkt.

**12.** Verfahren nach einem der Ansprüche 1 bis 11, **dadurch gekennzeichnet, daß** das Entfernen des Gliederobjekts von seiner Umgebung mit Hilfe eines Gleitmittels (21, 31) ausgeführt wird, das auf die globale Position und/oder die globale Ausrichtung und/oder die Vielzahl von Graden des Gliederobjekts wirkt.

**13.** Verfahren nach einem der Ansprüche 1 bis 12, **dadurch gekennzeichnet, daß** das Verfahren ferner einen Schritt des Verschiebens des Gliederobjekts (10) in Echtzeit durch einen Operator mit Hilfe eines Operatormittels (23, 33) umfaßt, das auf die Position und/oder die Ausrichtung und/oder die Vielzahl von Graden des Gliederobjekts wirkt.

**14.** Verfahren nach einem der Ansprüche 1 bis 13, **dadurch gekennzeichnet, daß** das Gliederobjekt (10) ein virtuelles Mannequin (10a) ist, das sich auf einem Boden der virtuellen Umgebung bewegt, wobei das Mannequin durch eine Position auf dem virtuellen Boden, eine Ausrichtung um eine Vertikalachse senkrecht zum Boden und verlaufend durch den Schwerpunkt des Mannequins, und die Vielzahl von Gelenkwinkeln definiert ist, die die Gesamtheit seiner Gliederelemente definieren.

**15.** Computerprogramm, **dadurch gekennzeichnet, daß** es dazu ausgeführt ist, das Verfahren nach einem der Ansprüche 1 bis 14 zu realisieren, wenn es von einem Computer (1) ausgeführt wird.

**FIG.1**

7

1

2

3

4

6

5

---

INITIALISATION — S0

DEPLACEMENT ELEMENTAIRE — S1

COLLISION ? — S2 — **oui**

**non**

AFFICHAGE DU DEPLACEMENT ELEMENTAIRE — S3

ANNULATION DU DEPLACEMENT ELEMENTAIRE — S4

S5 — ELOIGNEMENT

**FIG.7A**

---

INITIALISATION — S0

DEPLACEMENT ELEMENTAIRE — S1

COLLISION ? — S2 — **oui**

**non**

AFFICHAGE DU DEPLACEMENT ELEMENTAIRE — S3

S5 — ELOIGNEMENT

**FIG.7B**

FIG.2A

FIG.2B

FIG.3A

FIG.3B

FIG.4

FIG.5

FIG.6

FIG.8

EP 1 528 511 B1